# EUROPEAN PATENT SPECIFICATION

(11) **EP 3 471 940 B1**
(45) Date of publication and mention of the grant of the patent: **08.01.2020**
(21) Application number: 16754575.5
(22) Date of filing: 16.06.2016
(51) Int. Cl.: B29C 33/30, B29D 30/72

(54) **PLUG SYSTEM WITH MAGNETIC CONNECTION**
STECKERSYSTEM MIT MAGNETISCHER VERBINDUNG
SYSTÈME DE CONNECTEUR À LIAISON MAGNÉTIQUE

(43) Date of publication of application: 24.04.2019
(73) Proprietor: Sürücü, Mehmet, Basiskele/Kocaeli (TR)
(72) Inventor: Sürücü, Mehmet, Basiskele/Kocaeli (TR)
(74) Representative: Yamankaradeniz, Kemal
(86) International application number: PCT/TR2016/000086
(87) International publication number: WO 2017/217943

(56) References cited:
- JP-A- S5 955 730
- JP-A- H05 237 878
- JP-A- 2006 001 224
- US-B1- 6 315 539
- US-B1- 7 883 326

## Description

The present invention relates to the plug system with magnetic connection enabling the plugs (seal, stamp etc.) used for marking of the tire sidewalls within the manufacturing (firing, vulcanization) mould (processing on the tire, the information such as tire brand, product name, tire dimension, information of the manufacturer, tire dimension, technical properties of the tire, load and speed limits etc.) in the tire manufacturing sector, to be placed within the manufacturing mould with magnetic connection and to be changed much faster by easy removal from the mould, when compared to the state of the art in the sector.

There are expressions and information such as, the tire brand, product name, tire dimension, load and speed limits, noise values, manufacturer logo, manufacturing place, tire quality grading, marks and figures related to the tire manufacturing standards, abrasion index, technical properties of the tire etc. on the sidewalls (lateral face) of the tires of the vehicles. The mentioned information and expressions are generally processed on the sidewalls of the tires in the special moulds in which the raw tire is fired. In the state of the art, in order for a tire to reach the desired dimension, design and dimension, the raw tire is fired for a predetermined time under a specific temperature and pressure, in special moulds. The tire sidewall marking and the base designs are also carried out during the firing within the mentioned moulds.

The sidewall markings on the tires contain many expressions and information. Mentioned expressions and information are changed as based on the parameters such as the dimensions of the tire, the national and regional standards of the location where it shall be used, anticipated conditions of use, type of the tire etc.. In short, when the tire type changes, the information and expressions on the tire also change.

Tire marking is carried out within the raw tire firing moulds. In the state of the art, marking tools such as plug, printing block, stamp etc. blocks or plates are used for tire marking process. In the moulds in which the raw tire is heat-treated, the mentioned marking tools are placed on the surfaces, which coincide with the tire sidewall. While the raw tire is being shaped within the mould, by heat and pressure, the information and expressions related to the tire appear at the sections that coincide with the mentioned marking tools. This way, the information and expressions such as the tire brand, product name, tire dimension, load and speed limits, manufacturer logo, place of manufacturing, tire quality grading, the signs and figures related to the tire manufacturing standards, abrasion index, technical properties of the tire etc. are placed on the tire that comes out of the mould.

Tires of different types can be printed in the same mould. In this case; when a different series is being processed in the tire manufacturing, the mould is opened and the marking tools inside are replaced by those which correspond to the relevant series. For example, the load and speed limits of the tires printed in the same mould may vary as based on the standards of the country of use or material characteristics. Within this context, the load and speed limits to be printed on the tire is required to be changed according to the material characteristics or the country where the tire shall be launched. In such a case, the mould is opened, the marking tool (plug, printing block, stamp etc.) that processes the load and speed limits on the tire sidewall is removed from its place on the mould and the marking tool with the new load and speed limits is attached to the same place. In the state of the art, there are many methods and solutions for placement of the marking tools on the mould and replacement. In the state of the art, the marking tools are placed on the mould by means of mechanical connection elements such as screws, bolts, pins, channels etc.. In the state of the art, the mentioned elements generally hold the marking tools from the lower part of the mould. The connections carried out over the marking tool (for example; screw heads, pin protrusions etc.) may cause irrelevant shapes to appear on the tire sidewall. However, the most important problem in the state of the art is the removal of the mentioned mechanical connection elements during the replacement of the marking tool and the waiting time required for cooling of the mould in order to remove the marking tool. This results in loss of labor and time in tire manufacturing. For example, even changing a single marking tool requires the opening of the mould, waiting for the cooling of the mould, removal of the mechanical connection elements one by one, removal of the marking tool, placement of the new marking tool, attachment of the mechanical connection elements one by one and waiting until the mould reaches the operation temperature.

In the state of the art, there is a patent document no US2296016 with the title "Tire mold". In this document, a marking device (plug), which is fixed to the mould by embedded screws mounted from the top, is mentioned. The screws fixing the marking tool onto the mould are tightened and loosened by means of an apparatus holding the head of the embedded screw. The plug system mentioned in the document no. US2296016 cannot overcome the disadvantages mentioned above.

In the state of the art, there is a patent document no US2679663 with the title "Marking of molded articles". In this document, a marking tool (plug) that is fixed onto the mould by means of a pin or protrusion is mentioned. This invention which solves the problem of fixing, does not bring any solution to the loss of labor and time experienced during the removal of the marking tool from the mould.

In the state of the art, there is a patent document, publication no WO2006121439 with the title "Readily interchangeable marker for a tire mold". In this document, marking element in the form of a seal placed within the mould is mentioned. Elbow-channel on the marking element is inserted in the pin in the mould, thus the fixing is provided. The form and dimensions of this marking tool are limited as of its structure and method of placement in the mould. In order to place the mentioned marking tool in the mould by the mentioned method, it is required that it has a cylindrical or conical form. Moreover, only small dimension markings are possible with the mentioned marking tool.

In the state of the art, there is a patent document, publication no JPH05237878A with the title " Injection mold". In this document, an injection mold consists of a fixed mold, a movable mold, and split molds provided between the fixed mold and the movable mold is mentioned. In the split molds including core-replaceable split molds, the core-replaceable split mold is so constructed that a replaceable core with a magnet securely embedded in the rear surface thereof is fitted into a replaceable core loading recess on a surface of a split mold base.

In the state of the art, there is a patent document, publication no JPS5955730A with the title "Mold for rubber product". In this document, a mold that integrally forms a concave or convex identification bar with different regularity for each type of rubber product on the identification surface of a rubber product that does not have trust; and a molding die for rubber products, wherein a recess is provided in the molding surface of the die corresponding to the identification bar molding portion while a plate is provided separately, are mentioned.

In the state of the art, there are marking tools constructed of materials such as aluminum etc., which are placed in the slots opened in the mould. These marking tools are placed in the slots in the mould, when it is cold. When changing the marking tools, aluminum plugs are removed from the hot mould by hitting with a hammer and cutter. This method can be risky for the occupational health and safety. Moreover, the aluminum plugs removed by hammer and cutter can be deformed. Such deformed aluminum plugs cannot be used again. In order to remove the aluminum plugs from the mould, there should be a gap between the plug body and the slot, so that the end of the cutter can be inserted. This state causes an unneeded shape to form on the tire sidewall due to the mentioned gap.

The present disclosure relates to a plug system with magnetic connection used for marking the tire sidewalls in the firing mould (tire brand, product name, tire dimension, manufacturer information, tire dimension, technical properties of the tire, load and speed limits etc.) in the tire manufacturing sector, completely overcomes the disadvantages mentioned above. It discloses the plug fixing on the slots of the manufacturing (firing) mould by magnetic connection; removal of the plug from the mould, which is fixed on the mould by magnetic connection, by a push-mechanism; this way, performance of the plug in a fast and safe manner without waiting for the cooling of the mould; not having any dimension and shape limitation for the plugs placed in the mould, thanks to the magnetic connection; not having any gap or protrusion between the plug and the slot; the plug removed from the slot not being damaged; prevention of the cost, labor and time losses based on the plug replacement, thanks to the plug system with magnetic connection plug system with magnetic connection; practical, economic, efficient and safe use of the plug system with magnetic connection.

The first characteristic of the plug system with magnetic connection is the placement of the marking tool (plug) in a slot on the mould, by magnetic connection. Mentioned magnetic connection is provided by magnetization or by any tool (magnet, a live conductor coil etc.) creating electromagnetic field. This way, the mechanical connection tools such as screws, bolts, pins etc. are not needed for mounting the plug onto the mould. As a result, saving is provided on time and labor which was spent on the removal and attachment of the mechanical connection tools during the placement of the plug in the slot and replacement.

When the user approaches the plug to the slot on the mould, the magnetic connection tool in the slot applies magnetic attraction force on the plug. This way, the plug is placed in the slot without any difficulties. Thanks to the magnetic connection, there is no need for any gap and/or protrusion on and/or around the plug. The plug is seated fully within the slot. When the plug is placed in the slot, there are no gaps on the sides. This way, marking process is performed in a clean (burr-free) manner.

The second characteristic of the plug system with magnetic connection is the removal of the plug, which is fixed in the slot on the mould by means of a magnetic connection, from the slot by the use of a push mechanism. The push mechanism can be designed in various ways. As an example, push-pins with rack gear, which is moved by a shaft with pinion gear, can be used in the push mechanism. The movement of the shaft with pinion gear can be provided by man or animal power. Push-pin or pins with rack gear can be in the slot and/or on the plug (on the surface of the plug which contacts inside the slot). When the plug with magnetic connection is desired to be removed from the slot, the user applies rotational motion on the shaft with pinion gear. The rotational motion of the shaft with pinion gear causes the rack gear pin to move vertically. The rack gear pin moving vertically in the slot or on the plug provides the removal of the plug from the slot. If the rack gear pin is in the slot, then it applies pushing motion towards the plug. If the rack gear pin is on the plug, then it applies pushing motion towards the slot. This way, the plug, which is released from the slot and moved away from the magnetic attraction force, can easily be removed. The user can safely take the plug (for example, by heat-resistant gloves or by a holding apparatus), which came of the slot slightly from the mould. The plug can be removed without waiting for the cooling of the mould, thanks to the shaft with pinion gear which can be moved outside the mould. The plug to replace the removed plug is attached again by means of magnetic connection. This way, no waiting period is required for the cooling of the mould in order to change the marking tool. The marking tool (plug) replacement is performed in a fast, practical and safe manner thanks to the plug system with magnetic connection.

Mentioned push-mechanism can be designed as different from the one described above. For example, the push pins can be activated by buttons or spring-stretch tools can be used in place of push-pins etc.

The present invention is explained in detail through sampling with the attached drawings; such drawings are as;

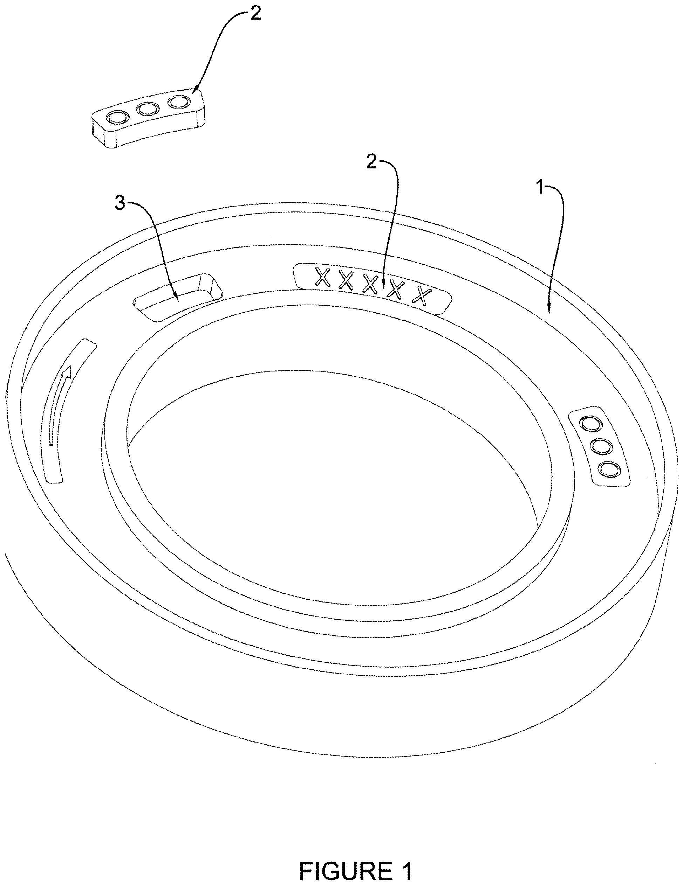

**Figure 1** is the general view of the marking tool and the tire firing mould.

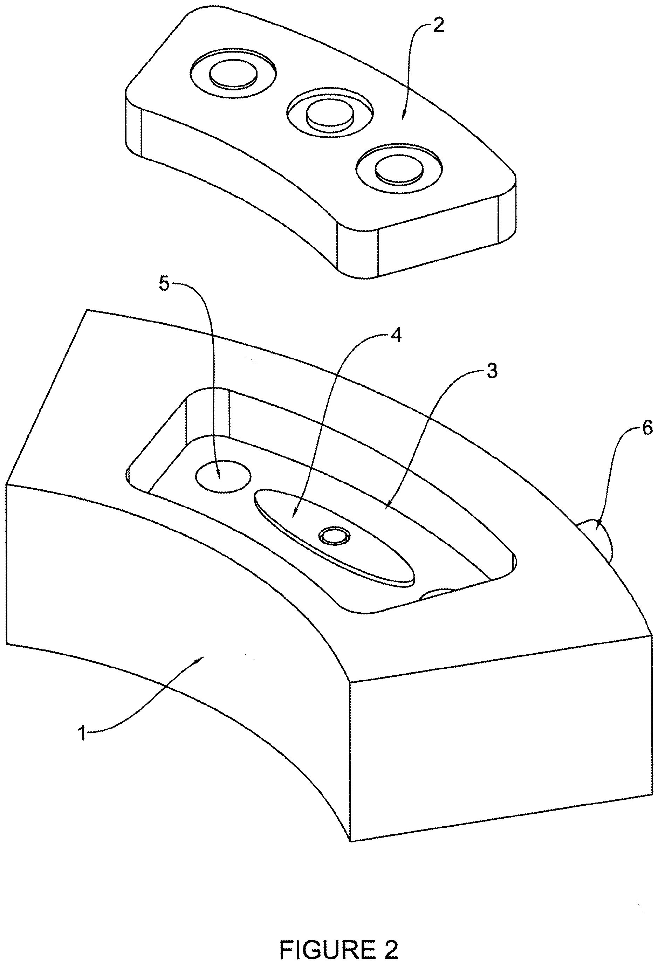

**Figure 2** is the separate view of the plug with magnetic connection apart from the slot.

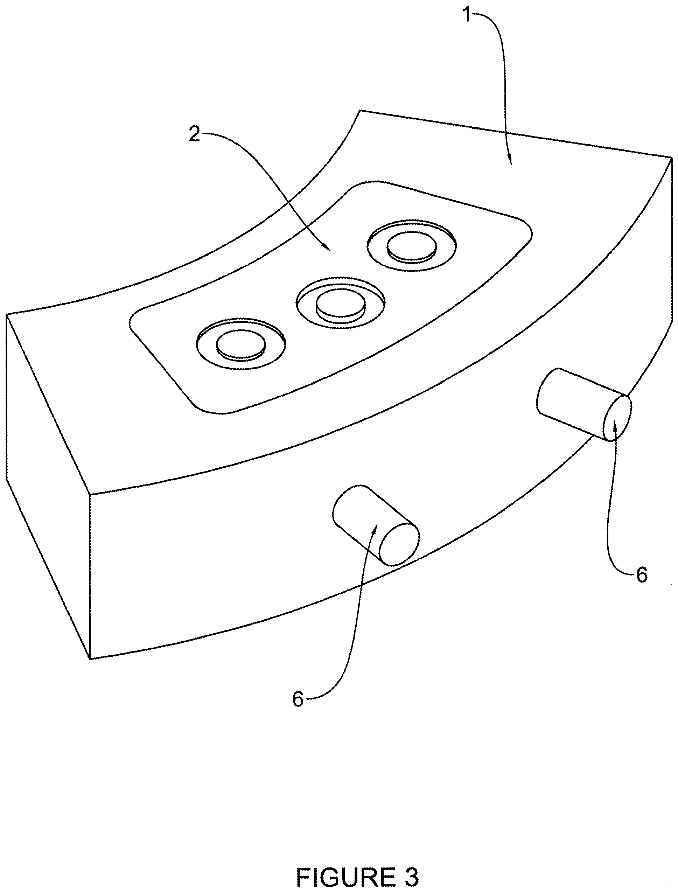

**Figure 3** is the view of the plug with magnetic connection in the slot.

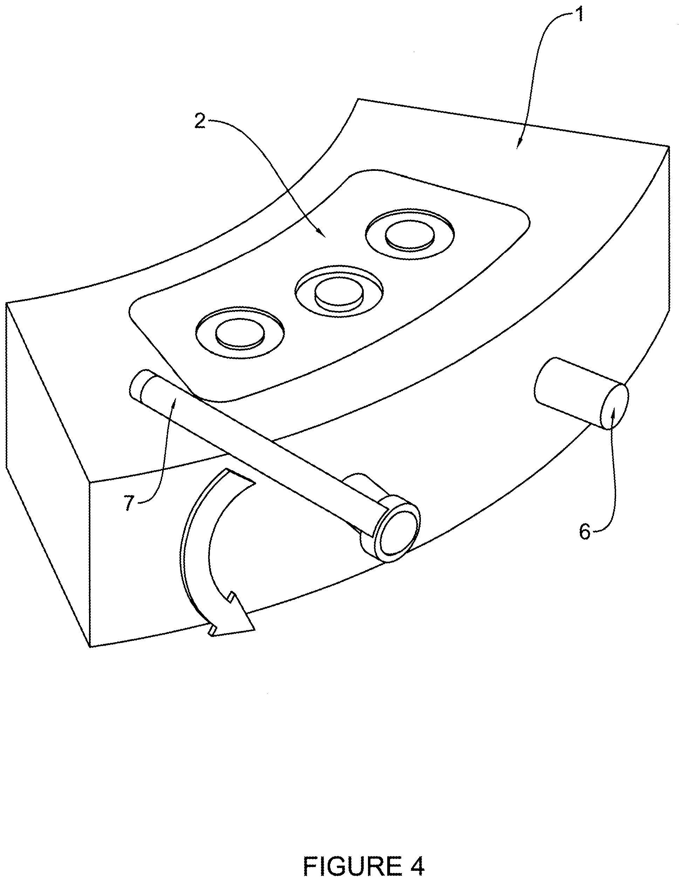

**Figure 4** is the view of the rotation of the shaft with pinion gear while the plug with magnetic connection is in the slot.

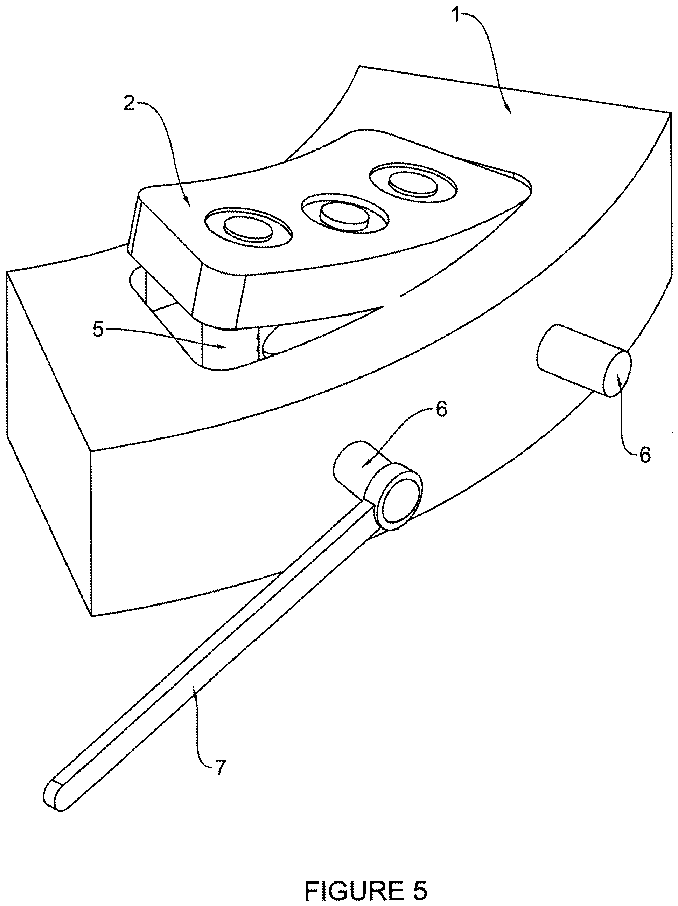

**Figure 5** is the view of the release of the plug from the slot as the shaft with pinion gear rotates.

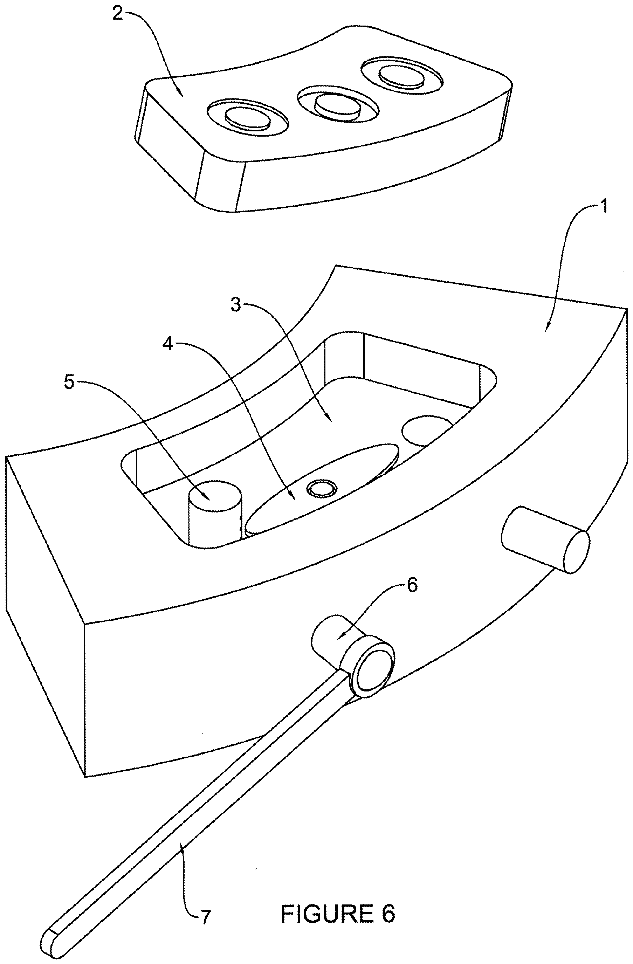

**Figure 6** is the view of the plug released of the slot and the push-pin raised within the slot.

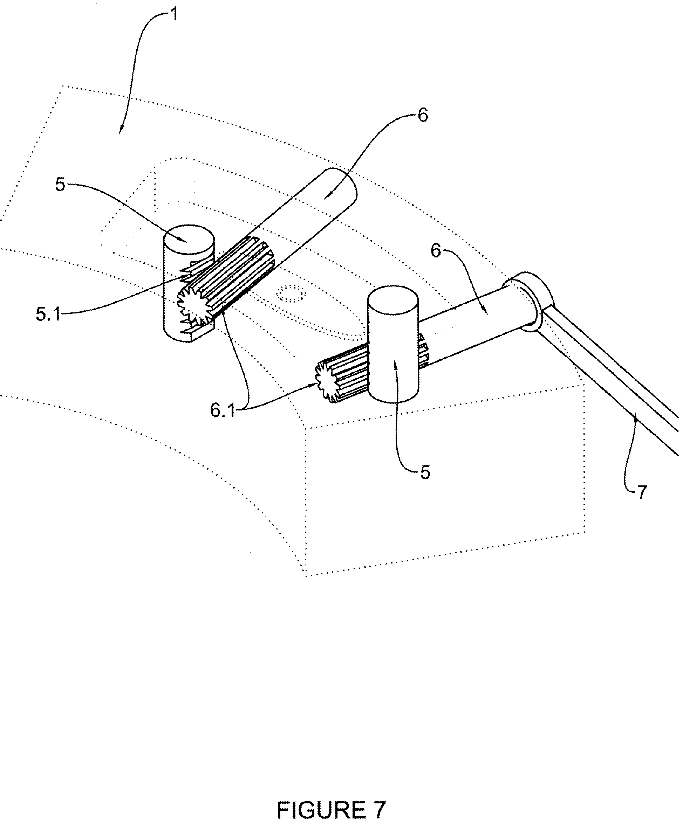

**Figure 7** is the view of the push-mechanism within the mould (made transparent).

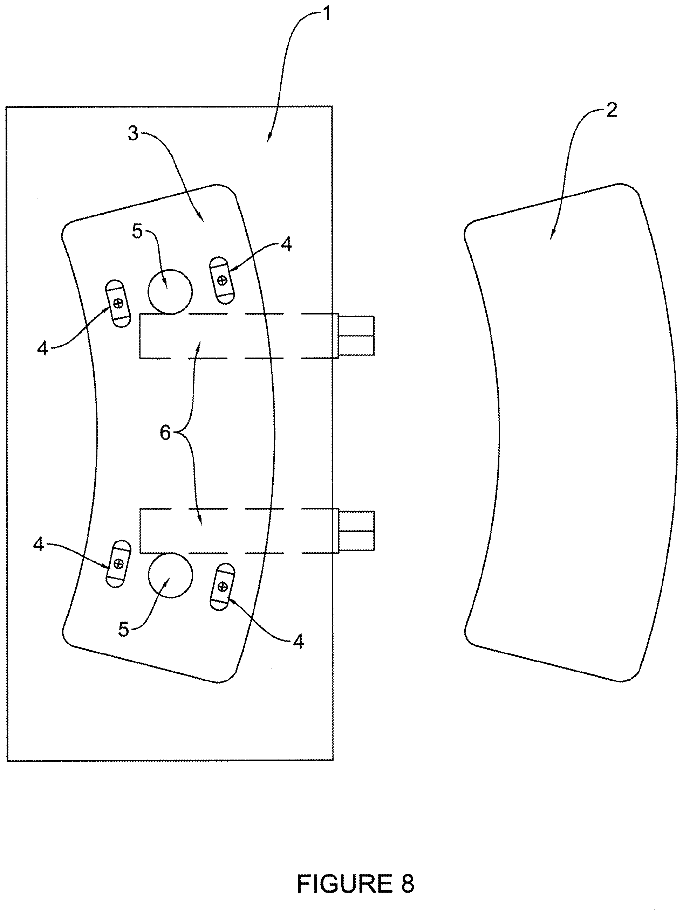

**Figure 8** is the top view of the plug, slot, magnetic connection and push-mechanism.

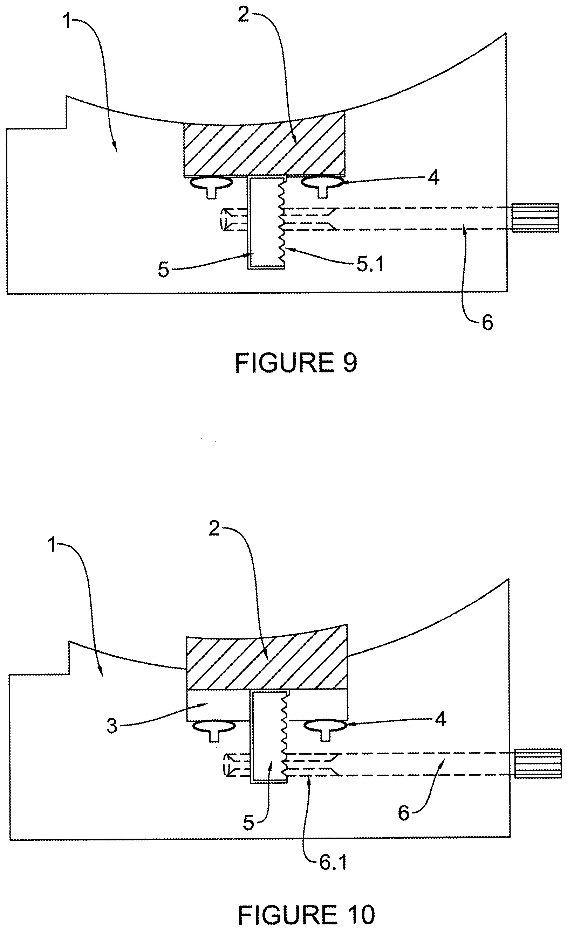

**Figure 9** is the side view of the plug, slot, magnetic connection and push-mechanism. (Plug in the slot)
**Figure 10** is the side view of the plug, slot, magnetic connection and push-mechanism. (Plug raised upwards from the slot by means of the push-mechanism)

**Legend:**

| NO | NAME OF THE PART |
|---|---|
| 1 | Mould |
| 2 | Plug |
| 3 | Slot |
| 4 | Magnetic connection |
| 5 | Push-pin |
| 5.1 | Rack gear |
| 6 | Shaft |
| 6.1 | Pinion gear |
| 7 | Wrench |

According to claim 1, the present invention relates to a plug system with magnetic connection used for marking the tire sidewalls in the firing mould (processing on the tire, information such as tire brand, product name, tire dimension, manufacturer information, tire dimension, technical properties of the tire, load and speed limits etc.) in the tire manufacturing sector. Said plug system is generally composed of; a magnetic connection(4) tools providing the placement and fixing of the plugs(2)(marking tools) in the slots(3) on the sidewall of the mould(1) and a push-mechanism releasing the plug(2) placed in the mould(1) from the magnetic connection(4) and removing it from the slot(3).

According to claim 4, the present invention also relates to a method of placement of plugs in a mold in the plug system with magnetic connection according to claim 1 used for marking of the tire sidewalls within the manufacturing mould in a tire manufacturing sector. In general, the plug system with magnetic connection is composed of two basic points: The first one is the placement of the plug(2) (marking tool) in the slots(3) on the mould(1), by means of a magnetic connection(4). In the plug system with magnetic connection, the plugs(2) used for marking the tire sidewalls are kept in the slots(3) on the mould(1) by means of the magnetic connection(4). The mentioned magnetic connection(4) is provided by a magnet, a live conductor or by any tool creating magnetic field. The magnetic connection(4) tools can be in any layout and number within the slot(3). The layout, number and dimensions of the magnetic connection(4) tools vary as based on the characteristics of the plugs(2) to which they are connected. The magnetic connection(4) tools which constantly interact with the metal mould(1) and the plugs(2) preserve their magnetic characteristics for a long time.

The second basic characteristic is the removal of the plug(2), which is fixed in the slot(3) on the mould(1), from the slot by the use of a push mechanism from the magnetic connection. The push mechanism usually operate on the principle of at least on push-pin(5) pushing the plug(2) out of the slot(3) to some extent. The mentioned push-pins(5) in the slot(3) or on the plug(2). If the push-pin(5) is in the slot(5), then it applies pushing motion towards the plug(2). If the push-pin(5) is on the plug(2), then it applies pushing motion towards the slot(3). The push-pins(5) can be activated by the methods such as the buttons, springs, screws, gears etc..

As an example, when the gear method is used; there is a rack gear(5.1) line on the push-pin(5). In this case, the push-pin(5) is moved by a shaft(6) with pinion gear(6.1). The shaft(6) with pinion gear(6.1) is in contact with the mentioned push-pin(5). This contact is provided from the mould(1). The pinion gear(6.1) end of the mentioned shaft(6) is on the rack gear(5.1) push-pin(5) side; and the other end is a little bit outside the external face of the mould(1). This way, the push-pin(5) in the slot(3) moves vertically, when the user rotates the shaft(6) with pinion gear(6.1) from outside the mould(1). The push-pin(5) moving vertically pushes the plug(2) to the outside of the slot(3) to some extent and frees it from the magnetic connection(4).

A sample use of the plug system with magnetic connection is as follows:
The user places the plugs(2), which are appropriate for the properties of the tire to be manufactured, in the slots(3) on the mould(1) without using any tools. The plugs(2) placed in the slots(3) are fixed by means of the magnetic connection(4) tools in the slot(3) and/or on the plug(2).

Raw tire is poured in the mentioned mould(1) and the mould(1) is brought to the temperature which is required for the tire manufacturing. This way, the firing and shaping phase of the tire is started. The plugs(2) placed in the mould(1) by means of a magnetic connection(4) provide the formation of the relevant markings on the tire sidewalls during the mentioned process.

When the type of the tire to be manufactured in the mould(1) changes, it is required to attach the plugs(2) appropriate for the mentioned tire type to the mould(1). In this case, the mould(1) is opened and the plug(2) is pushed out of the slot(3) to some extent by means of a push-mechanism. The cooling of the mould(1) is waited for the mentioned process. The plug(2), which is moved out of the slot(3) to some extent is taken by heat resistant gloves or by a holding apparatus and the new plug(2) is placed in the slot(3). Fixing of the new plug(2) in the slot(3) is again carried out by means of a magnetic connection(4). When the new plug(2) is inserted in the slot(3), only a short waiting time is needed so that the heat is transferred from the mould(1) to the plug(2) and following this, the tire manufacturing is continued. When the dimensions of the hot mould(1) and the plug(2) not heated yet are taken into consideration, mentioned heat transfer is completed in a very short period of time.

The operation of the mentioned push-mechanism is as follows:
The push-mechanism is composed of at least one push-pin(5) in the slot(3) or on the plug(2) and at least one shaft(6) or button or crank etc. providing the movement of the mentioned push-pin(5) from outside the mould(1). When the user desires to change the plug(2) which is inserted in a slot(3) on the mould(1), he/she rotates the mentioned shaft(6) by means of a wrench(7) or pushes the mentioned button or manually rotates the mentioned crank.

For example; the mentioned shaft(6) is rotated by its end outside the mould(1), by a wrench(7). The end of the shaft(6) located in the mould(1) is in the form of a pinion gear(6.1). the pinion gear(6.1) end of the shaft(6) is in contact with the push-pin(5). In this area, there is a rack gear(5.1) on the push-pin(5). This way, when the shaft(6) rotates, the push-pin(5) moves vertically. Such vertical motion enables the push-pin(5) to push the plug(2) out of the slot(3) to some extent.

The vertical motion of the push-pin(5) is carried out by rotation of the crank arm or by pressing a button or by a motor gear system.

## Claims

1. A plug system with magnetic connection used for marking of the tire sidewalls within a manufacturing mould in a tire manufacturing sector containing;
- magnetic connection tools (4) located on the surfaces of the plugs (2) used for marking the tires, which contact the mould (1) and/or in the plug slots (3) within the structure of the mould (1) and which provide the placement and fixing of the mentioned plugs (2) in the mentioned slots (3) on the mould (1)
and
- a push-mechanism pushing the plugs (2), which are fixed in the slots (3) within the structure of the mould (1) by means of the mentioned magnetic connection (4), outwards to some extent and this way releasing them from the magnetic connection (4),
wherein the push-mechanism contains:
- at least one push-pin (5) in the mentioned slot (3) and/or within the structure of said plug (2)
and
shaft (6) or gear system that provides the push-pin (5) in the slot (3) to move towards the plug (2) and/or the push-pin (5) within the structure of the plug (2) to move toward the slot (3), which can be controlled from outside the mould (1).

2. The plug system with magnetic connection according to Claim 1, **characterized in that** the magnetic connection tools (4) is composed of magnet and/or live conductor and/or a system creating a magnetic field.

3. The plug system with magnetic connection according to Claim 1 or Claim 2, **characterized by** containing;
- rack gear (5.1) line on the mentioned push-pin (5) and
- pinion gear (6.1) on the end of the mentioned shaft (6) or crank or screw, which is in contact with the push-pin (5).

4. Method of placement of plugs (2) in a mould (1) in the plug system with magnetic connection according to claim 1 used for marking of the tire sidewalls within the manufacturing mould in a tire manufacturing sector **characterized by**;
- placement of the plugs (2), which are in compliance with the properties of the tire to be shaped in the mould (1), in the plug slots (3) within the structure of the mould without using any tools and
- fixing the plugs placed in the mentioned slots, by means of magnetic connection (4) in the slots.

## Patentansprüche

1. Stecksystem mit Magnetverbindung, das zur Kennzeichnung von Reifenseitenwänden in einer Produktionsform in einem Reifenherstellungssektor verwendet wird, mit:
- magnetischen Verbindungswerkzeugen (4), die sich auf den Oberflächen der Steckelemente (2) befinden, die zur Kennzeichnung der Reifen verwendet werden, wobei sie die Form (1) berühren und/oder in den Steckschlitzen (3) in der Struktur der Form (1) Kontakt herstellen, und wobei sie die Platzierung und Fixierung der Steckelemente (2) in den Schlitzen (3) an der Form (1) bereitstellen;
und
- einem Druckmechanismus, der die Steckelemente (2), die durch die Magnetverbindung (4) in den Schlitzen (3) in der Struktur der Form (1) fixiert sind, in gewissem Ausmaß nach außen drückt und sie dadurch aus der magnetischen Verbindung (4) freigibt,
wobei der Druckmechanismus folgendes aufweist:
- einen Druckstift (5) in dem Schlitz (3) und/oder in der Struktur des Steckelements (2); und
eine Welle (6) oder ein Zahnradsystem, das dafür sorgt, dass sich der Druckstift (5) in dem Schlitz (3) in Richtung des Steckelements (2) bewegt, und/oder dass sich der Druckstift (5) in der Struktur des Steckelements (2) in Richtung des Schlitzes (3) bewegt, wobei dies von außerhalb der Form (1) gesteuert werden kann.

2. Stecksystem mit Magnetverbindung nach Anspruch 1, **dadurch gekennzeichnet, dass** die magnetischen Verbindungswerkzeuge (4) aus einem Magneten und/oder einem stromführenden Verbinder bestehen und/oder einem System, das ein Magnetfeld erzeugt.

3. Stecksystem mit Magnetverbindung nach Anspruch 1 oder 2, **dadurch gekennzeichnet, dass** dieses folgendes aufweist:
- eine Zahnstange (5.1) an dem Druckstift (5); und
- ein Ritzel (6.1) an dem Ende der Welle (6) oder Kurbel oder Schraube, in Kontakt mit dem Druckstift (5).

4. Verfahren zum Platzieren von Steckelementen (2) in einer Form (1) in dem Stecksystem mit Magnetverbindung nach Anspruch 1, das zur Kennzeichnung von Reifenseitenwänden in einer Produktionsform in einem Reifenherstellungssektor verwendet wird, **gekennzeichnet durch**:
- Platzieren der Steckelemente (2), die den Eigenschaften des in der Form (1) zu formenden Reifens entsprechen, in den Steckelementschlitzen (3) in der Struktur der Form, ohne dass dafür ein Werkzeug verwendet wird; und
- Fixieren der in den Schlitzen platzierten Steckelemente durch magnetische Verbindung (4) in den Schlitzen.

## Revendications

1. Système de bouchon à liaison magnétique utilisé pour le marquage des flancs d'un pneu à l'intérieur d'un moule de fabrication dans un secteur de fabrication de pneus contenant ;
des outils de liaison magnétique (4) situés sur les surfaces des bouchons (2) utilisés pour le marquage des pneumatiques, qui sont en contact avec le moule (1) et/ou dans les fentes de bouchon (3) à l'intérieur de la structure du moule (1) et qui assurent le placement et la fixation des bouchons (2) mentionnés dans les fentes (3) mentionnées du moule (1) et
un mécanisme de poussée poussant les bouchons (2), qui sont fixés dans les fentes (3) à l'intérieur de la structure du moule (1) au moyen de la liaison magnétique (4) mentionnée, vers l'extérieur dans une certaine mesure et les libérant de cette manière de la liaison magnétique (4),
le mécanisme de poussée contenant :
au moins un poussoir (5) dans la fente (3) mentionnée et/ou dans la structure dudit bouchon (2) et de l'arbre (6) ou du système d'engrenage qui fournit le poussoir (5) dans la fente (3) pour se déplacer vers le bouchon (2) et/ou le poussoir (5) dans la structure du bouchon (2) pour se déplacer vers la fente (3), qui peut être commandé de l'extérieur du moule (1).

2. Système de bouchon à liaison magnétique selon la revendication 1, **caractérisé en ce que** les outils de liaison magnétique (4) sont composés d'un aimant et/ou d'un conducteur sous tension et/ou d'un système créant un champ magnétique.

3. Système de bouchon à liaison magnétique selon la revendication 1 ou 2, **caractérisé en ce qu'**il contient ;
un engrenage à crémaillère (5.1) sur le poussoir (5) mentionné et
un engrenage à pignon (6.1) sur l'extrémité de l'arbre (6) mentionné ou manivelle ou vis, qui est en contact avec le poussoir (5).

4. Procédé de placement de bouchons (2) dans un moule (1) du système de bouchon à liaison magnétique selon la revendication 1 utilisé pour le marquage des flancs du pneu dans le moule de fabrication dans un secteur de fabrication de pneus **caractérisé par** ;
le placement des bouchons (2), qui sont conformes aux propriétés du pneu à mettre en forme dans le moule (1), dans les fentes de bouchons (3) à l'intérieur de la structure du moule sans utiliser d'outils, et
la fixation des bouchons placés dans les fentes mentionnées, au moyen d'une liaison magnétique (4) dans les fentes.
